# EUROPEAN PATENT SPECIFICATION

(11) **EP 4 187 723 B1**
(45) Date of publication and mention of the grant of the patent: **16.09.2026**
(21) Application number: 21306644.2
(22) Date of filing: 25.11.2021
(51) Int. Cl.: H01R 13/03, H01R 43/16, B32B 3/26, B32B 3/30, B32B 7/12, B32B 15/20

(54) **ELECTRICALLY CONDUCTIVE CONTACT ELEMENT FOR A CONNECTOR**
ELEKTRISCH LEITENDES KONTAKTELEMENT FÜR EINEN STECKVERBINDER
ÉLÉMENT DE CONTACT ÉLECTRIQUEMENT CONDUCTEUR POUR UN CONNECTEUR

(43) Date of publication of application: 31.05.2023
(73) Proprietor: TE Connectivity Solutions GmbH, 8200 Schaffhausen (CH)
(72) Inventor: ROUILLARD, Xavier, Pontoise (FR); Daher, Joseph, Pontoise (FR); MD, Sundareshan, Bangalore (IN)
(74) Representative: Grünecker Patent- und Rechtsanwälte PartG mbB

(56) References cited:
- WO-A1-2020/049988
- US-A1- 2008 257 581
- US-A1- 2013 014 979

## Description

### Field of Invention

The present invention relates to an electrically conductive contact element for a connector which has a contact surface, and an electrical connector comprising such an electrically conductive contact element.

The present invention further relates to a method of manufacturing the contact surface of an electrically conductive contact element for an electrical connector.

### Background of the invention

Electrical connectors are generally used for signal or power transmission and to link electrical and electronic systems. Electrical connectors are provided with electrically conductive contact elements, which come into contact with a contact element of a mating electrical connector when the electrical connector is plugged to the mating electrical connector. The contact elements of the connector element are commonly formed as contact pins and those of the mating connector are commonly formed as contact springs. When the connector and mating connector are coupled, the contact springs exert elastic spring forces on the contact pins and thereby provide an electrical connection between the contact elements.

The quality of the electrical connection may be affected by mechanical and/or chemical degradations occurring at the contact surfaces of the contact elements. The respective contact surface of the electrically conductive contact elements may be coated with a layer of tin, nickel or alloys thereof.

As in motor vehicles, electrical connectors may be exposed to broad temperature variations, vibrations and corrosive environment, it can cause damages to the layer coating the contact surface. Fretting corrosion is known as a degradation resulting from the combination of a mechanical motion and a chemical reaction. The combination of the relative motion of mated contact surfaces, causing fretting wear, with corrosion (like oxidation) may lead to fretting corrosion. Fretting corrosion leads to the formation of insulating oxide layers in contact areas and can cause an increase of the electrical contact resistance. Moreover, wear damages, like abrasion, at the contact surfaces of the contact elements may also lead to an increase of the electrical constriction resistance. As the performance of the electrical connector is related to the reliability of the electrical contacts, there is a need for preventing wear damage at the contact surfaces so as to avoid malfunction due to the increase in electrical resistance.

Along with improving wear and corrosion resistance, low plugging and pulling forces are required in order to facilitate the mounting and maintenance of electrical connectors. In order to reduce the plugging force, the surface wear or fretting corrosion, the contact surfaces of the connectors from the prior art are oiled or greased. However, greased or oiled contact surfaces lose the applied grease or oil when in operation. For addressing this drawback related to the use of grease or oil in the contact surfaces, it is known from US 2019/0173214 A1 to provide an electrically conductive contact element for an electrical connector comprising a contact surface having a plurality of caverns arranged under the contact surface in a microstructure and having a lubricant filled and enclosed in the plurality of caverns. The spatial dimensions in the caverns according to US 2019/0173214 A1 is in the range of 0,1-50 micrometers. The arrangement of the caverns according to US 2019/0173214 A1 under the contact surface is such that an outlet of the cavern is tight enough so that the lubricant filled into the caverns cannot be accessed without establishing an opening from the contact surfaces into the cavern. Manufacturing the microstructure US 2019/0173214 A1 requires the use of a laser, an electron beam or surface treatment like masking and etching.

Surface contacts with microstructures are also known from documents WO2020049988A1 and documents US2008257581A1.

The object of the present invention is to provide an improved and cost effective contact element for a connector which can better withstand wear so as to reduce the contact resistance while reducing the mating force to ease the assembly and the maintenance of the connector, in particular without the need of using lubricant.

### Description of the Invention

The object of the present invention is achieved by means of an electrically conductive contact element for an electrical connector according to claim 1.

At the at least one depression, the electrically conductive contact element is provided with the electrically conductive material contained in the layer as well as with the electrically conductive material filled in the reservoir. Hence, at the at least one depression, under the contact surface, there is more electrically conductive material than in the rest of the electrically conductive contact element, wherein the first face of the body is covered by the layer of the electrically conductive material. As a result, an uneven wear of the contact surface is caused, such that presence of the electrically conductive material can last longer at the at least one depression. Consequently, the at least one depression provides a contact area that is preserved longer from mechanical wear and corrosion during the lifetime of the electrically conductive contact element. Accordingly, the resistance to the outdoor environment, like corrosive media and the electrical constriction resistance at the at least one depression is improved over the lifetime of the electrically conductive contact element with respect to the known contact element. It allows increasing the durability of an electrical connector comprising such electrically conductive contact element by preventing, or at least delaying, a malfunction of the connector related to the quality of the electrical contact. Moreover, as the presence of electrically conductive material allows reducing the required mating force thank to the mechanical properties of the electrically conductive material, the ease of assembly, plugging and handling of a related electrical connector can be enhanced.

The electrically conductive contact element can be further improved according to various advantageous embodiments. The embodiments are disclosed in the dependent claims.

According to one embodiment, the electrically conductive material filled in the reservoir can be configured to come in contact with a surface of a connecting part of the mating electrical connector.

Hence, the reservoir has a direct output at the contact surface. It allows directly exposing the electrically conductive material to a mating contact surface.

According to one embodiment, the body can be made of metal and the electrically conductive material can be a plating material made of tin, nickel, silver, gold, a tin-nickel alloy, an alloy of tin or a nickel-silver alloy.

Electrically conductive materials are selected so as to enable an electrical connection between electrical connectors.

The plating material can be selected based on its resistance to mechanical wear and/or corrosion, as well as its cost and availability.

According to the invention, a minimum dimension of the at least one depression in a plan of the contact surface can be greater than 0,05mm, in particular can be comprised between 0,05mm and 0,06mm.

Hence, given the dimension of the at least one depression, the at least one depression does not form a microstructure in the first face of the body. Hence, it is possible to use simpler and more cost-effective processes, like metal punching, for forming the macroscopic scale depression than manufacturing means require for forming a microstructure, like laser, electron beam or masking and etching.

It is noted that wording "greater" is to be read as "equal or greater", and not "strictly greater".

According to the invention, a maximal depth of the at least one depression is greater than 0,03mm, in particular greater than 0,04mm, more in particular more than 0,05mm.

As mentioned above, given the dimension of the at least one depression, the at least one depression does not form a microstructure in the first face of the body. Hence, it is possible to use simpler and more cost-effective processes, like metal punching, for forming the macroscopic scale depression than manufacturing means require for forming a microstructure, like laser, electron beam or masking and etching.

Moreover, the maximal depth can be adapted so as to improve further and longer the resistance to wear, by increasing the size of the reservoir of electrically conductive material.

It is noted that wording "greater" is to be read as "equal or greater", and not "strictly greater".

According to one embodiment, the at least one depression can have a half-spherical shape or a groove shape, in particular a rounded groove shape.

Half-spherical and round shapes allow avoiding the presence of sharp edges and optimizing the amount of electrically conductive material filled in the reservoir.

A groove shape allows providing reservoir that may advantageously extend along a direction of a back and forth motion of the mating contact surfaces, for example a motion caused by vibrations.

According to one embodiment, the electrically conductive contact element can further comprise an adhesion layer provided on the first face of the body and sandwiched between the first face and the layer of the electrically conductive material.

The quality of the electrical contact over time can be further improved by the use of an adhesion layer.

According to one embodiment, in the at least one depression, a thickness of the electrically conductive material can be greater than a thickness of the adhesion layer.

Hence, in spite of the presence of the adhesion layer, the reservoir is filled with a sufficient amount of electrically conductive material to provide the technical effects of improving the resistance to wear and corrosion and reducing the electrical constriction resistance and the required mating force.

According to one embodiment, the adhesion layer can be made of nickel, copper or tin.

According to one embodiment, the electrically conductive contact element can comprise a plurality of depressions and a minimum spacing distance between the depressions can be comprised between 0,10mm and 0,15mm.

The plurality of depressions provide a redundancy of improved contact areas, thereby enhancing the reliability and durability of the electrical contact between electrical connectors.

According to one embodiment, the first face of the body can comprise at least one curved region curved in at least one direction and the at least one depression can be arranged at the at least one curved region.

Curved region can provide a region that is more subjected to deformation than the other regions under elastic spring forces. By increasing the mechanical contact performance at the curved region, the electrical contact performance can be improved as well. Hence, it is particularly advantageous to arrange the at least one depression at the curved region.

According to one embodiment, the first face of the body can comprise a plurality of depressions of different shapes and/or sizes.

Hence, the design of the depressions can be advantageously adapted to the contact zone with a mating connector based on the force applied, the size of the contact zone etc.

According to one embodiment, the electrically conductive contact element can be comprised in an electrical connector configured to be coupled with a mating electrical connector.

The object of the invention is further achieved by means of an electrical connector according to claim 13.

In the electrical connector according to the present invention, at the at least one depression, the electrically conductive contact element is provided under the contact surface with the electrically conductive material contained in the layer as well as with the electrically conductive material filled in the reservoir. Hence, at the at least one depression, the contact surface made of the electrically conductive material is thicker than in the rest of the electrically conductive contact element. As a result, an uneven wear of the contact surface is caused, such that presence of the electrically conductive material can be maintained longer at the at least one depression. Consequently, the at least one depression provides a contact area that is preserved longer from mechanical wear and corrosion during the lifetime of the electrically conductive contact element of the electrical connector. Accordingly, the resistance to the outdoor environment, like corrosive media and the electrical constriction resistance at the at least one depression is improved over the lifetime of the electrically conductive contact element of the electrical connector with respect to the known electrical connectors. It allows increasing the durability of the electrical connector by preventing, or at least delaying, a malfunction of the connector related to the quality of the electrical contact. Moreover, as the presence of electrically conductive material allows reducing the required mating force thank to the mechanical properties of the electrically conductive material, the ease of assembly, plugging and handling of the electrical connector can be enhanced.

The object of the invention is also achieved by a method of manufacturing a contact surface of an electrically conductive contact element according to claim 14.

Hence, an easy and cost-effective manufacturing process can be used to form the contact surface.

The method of manufacturing allows providing a contact surface wherein at the at least one depression, under the contact surface, there is more electrically conductive material than in the rest of the electrically conductive contact element, wherein the first face of the body is covered by the layer of the electrically conductive material. As a result, an uneven wear of the contact surface is caused, such that presence of the electrically conductive material can last longer at the at least one depression. Consequently, the at least one depression provides a contact area that is preserved longer from mechanical wear and corrosion during the lifetime of the electrically conductive contact element. Accordingly, the resistance to the outdoor environment, like corrosive media and the electrical constriction resistance at the at least one depression is improved over the lifetime of the electrically conductive contact element with respect to the known contact element. It allows increasing the durability of an electrical connector comprising such electrically conductive contact element by preventing, or at least delaying, a malfunction of the connector related to the quality of the electrical contact. Moreover, as the presence of electrically conductive material allows reducing the required mating force thank to the mechanical properties of the electrically conductive material, the ease of assembly, plugging and handling of a related electrical connector can be enhanced.

According to one embodiment, the method of manufacturing can further comprise, before the step b), a step of applying an adhesion layer on the contact surface.

The step of adding an adhesion layer allows further improving the quality of the electrical contact throughout the lifetime of the electrical connector.

The accompanying drawings are incorporated into the specification and form a part of the specification to illustrate several embodiments of the present invention. The scope of the present invention is defined by the appended claims. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form - individually or in different combinations - solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
**Figure 1** illustrates a partial cross-sectional view of an electrically conductive contact element according to a first embodiment of the present invention at an initial stage.
**Figure 2** illustrates a body of the electrically conductive contact element shown in Figure 1.
**Figure 3** illustrates a partial cross-sectional view of an electrically conductive contact element according to a second embodiment of the present invention at an initial stage.
**Figure 4A** illustrates a top view of the electrically conductive contact element according to the second embodiment of the present invention at a later stage than the initial stage.
**Figure 4B** illustrates a cross-sectional view of the electrically conductive contact element shown in Figure 4A.
**Figure 5** illustrates an enlarged view of a body of an electrically conductive contact element according to a third embodiment of the present invention.
**Figures 6A, 6B and 6C** illustrate successive steps of a method of manufacturing a contact surface of the electrically conductive contact element according to the third embodiment of the present invention.

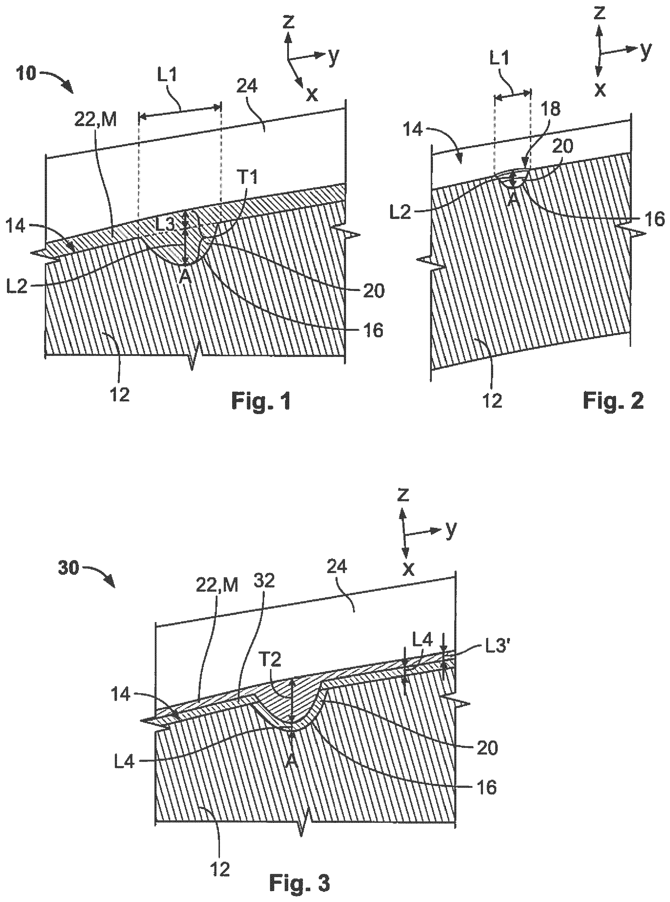

**Figure 1** and **Figure 2** illustrate a partial cross-sectional view of a body of an electrically conductive contact element 10 according to a first embodiment of the present invention. In Figure 1, a contact surface is represented, while in Figure 2 the contact surface is omitted in order to better highlight the structure of the body of the electrically conductive contact element 10. Figure 1 and Figure 2 are described together in the following.

The electrically conductive contact element 10 for an electrical connector (not represented) comprises a body 12, in particular a metallic body 12. The body 12 is delimited by a plurality of faces. According to the present invention, at least one face 14 of the body 12, said face 14 extending in a plan (XY) in the example of Figures 1 and 2, is provided with a depression 16. The depression 16 extends from an opening 18 in the face 14 partially into the body 12 along a direction parallel to the axis Z.

In the first embodiment, the depression 16 has a substantially half-spherical shape. The diameter L1 of the corresponding circular opening 18 is greater than 0,05mm, in particular can be comprised between 0,05mm and 0,06mm.

The maximal depth L2 of the depression 16 is greater than 0,03mm, in particular greater than 0,04mm, more in particular greater than 0,05mm.

It is noted that wording "greater" is to be read as "equal or greater", and not "strictly greater". In a variant, the depression 16 can have a groove shape, in particular a rounded groove shape. In another variant, the opening 18 of the depression 16 can have a square shape, a rectangular shape, an oval shape, triangular shape, etc.

The depression 16 forms a reservoir 20. Figure 2 illustrates an empty reservoir 20 in order to better highlight the structure of the depression 16. As mentioned above and emphasized in Figure 2, the depression 16 has one open-end 18.

As shown in Figure 1, a layer 22 of an electrically conductive material M of thickness L3 is provided on the face 14 of the body 12. The electrically conductive material M is a plating material that can be made of tin, nickel, silver, gold, a tin-nickel alloy, an alloy of tin or nickel-silver alloy.

In the first embodiment, the layer 22 of the electrically conductive material M is directly provided on the face 14.

A surface 24 of the layer 22 facing away from the body 12 of the electrically conductive contact element 10 forms a contact surface 24. The contact surface 24 extends substantially in the plane (XY). The contact surface 24 is configured to be brought into contact with a surface of a connecting part of a mating electrical connector (not represented).

As shown at the initial stage represented in Figure 1, in the first embodiment, a thickness T1 of electrically conductive material M is provided above a deepest point A of the reservoir 20, wherein T1= L2+L3.

The initial stage relates to a stage wherein the electrically conductive contact element 10 has not yet being brought in contact with an electrically conductive contact element of a mating connector. Hence, at the initial stage mechanical wear, corrosion, abrasion or any damages that may result from the mating surfaces have not yet occurred. That is why in the initial stage, as shown in Figure 1, the contact surface 24 is substantially flat in the plane (XY).

In the following, elements with the same reference numeral already described and illustrated with respect to Figures 1 and 2 will not necessarily be described in detail again, but reference is made to the previous description of the same reference numeral.

**Figure 3** illustrates a partial cross-sectional view of a body of an electrically conductive contact element 30 according to a second embodiment of the present invention.

In comparison to the first embodiment, in the second embodiment an adhesion layer 32 is directly provided on the face 14 of the body 12 and sandwiched between the face 14 of the body 12 and the layer 22 of the electrically conductive material M.

The adhesion layer 32 is provided with a substantially uniform thickness L4 on the face 14, including on the face 14 in the depression 16, as shown in Figure 3.

In the second embodiment, the layer 22 has a thickness L3', wherein L3' ≤ L3.

As shown in the initial stage represented in Figure 3, in the second embodiment, a thickness T2 of electrically conductive material M is provided above the deepest point A of the reservoir 20, wherein T2=L3'+(L2-L4).

In a variant (not represented), further layers may be sandwiched between the face 14 of the body 12 and the layer 22 of the electrically conductive material M.

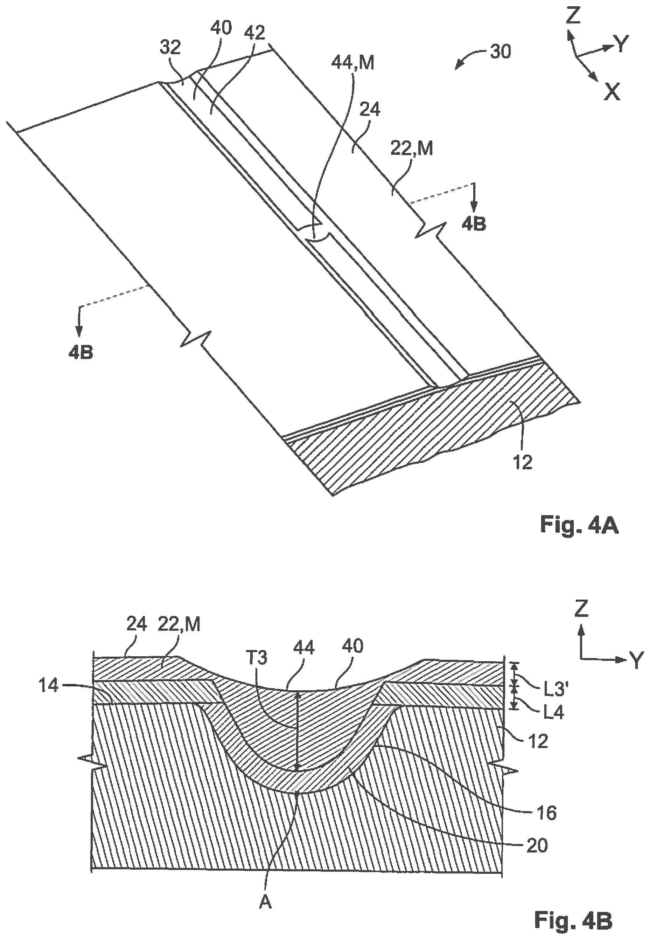

**Figure 4A** illustrates a top view of the electrically conductive contact element 30 according to the second embodiment of the present invention at a later stage than the initial stage, wherein mechanical and/or chemical wear has occurred. **Figure 4B** illustrates a cross-sectional view of the electrically conductive contact element 30 shown in Figure 4A. Figure 4A and Figure 4B are described together in the following.

In the following, elements with the same reference numeral already described and illustrated with respect to Figures 1 to 3 will not necessarily be described in detail again, but reference is made to the previous description of the same reference numeral.

In the stage of wear shown in Figures 4A, 4B, the mechanical and/chemical wear has caused a disruption 40 in the contact surface 24 leading to the exposure of the adhesion layer 32. At a later stage (not represented), the further removal of the adhesion layer 32 could lead to the exposure of the face 14 of the body 12. In the example of Figure 4A, the disruption 40 has the shape of a groove 42 extending along the axis X. Such linear groove shape may be caused by a back and forth motion of the mating contact surfaces for example. Other shapes (not represented) of disruption 40 in the contact surface 24 may occur, depending on the relative motions of the connector and the mating connector for instance.

According to the present invention, the presence of the depression 16 in the body 12 allows providing a reservoir 20 of electrically conductive material M such that at the wear stage of Figures 4A and 4B, a contact area 44 of electrically conductive material M still remains at the contact surface 24 despite the disruption 40.

As shown in Figure 4B, in the wear stage represented in Figures 4A and 4B, a thickness T3, wherein T3<T2, of electrically conductive material M above the deepest point A of the depression 16 still remains in the reservoir 20. Hence, an uneven wear at the contact surface 24 is achieved allowing providing at least one contact area 44 of low electrical contact resistance.

It is noted that the same effect of providing a contact area 44 of electrically conductive material M would occur in the electrically conductive contact element 10 according to the first embodiment. In contrast with the second embodiment, a disruption 40 in the contact surface 24 in the contact element 10 according to the first embodiment would lead to expose directly the face 14 of the body 12, due to the absence of an adhesion layer.

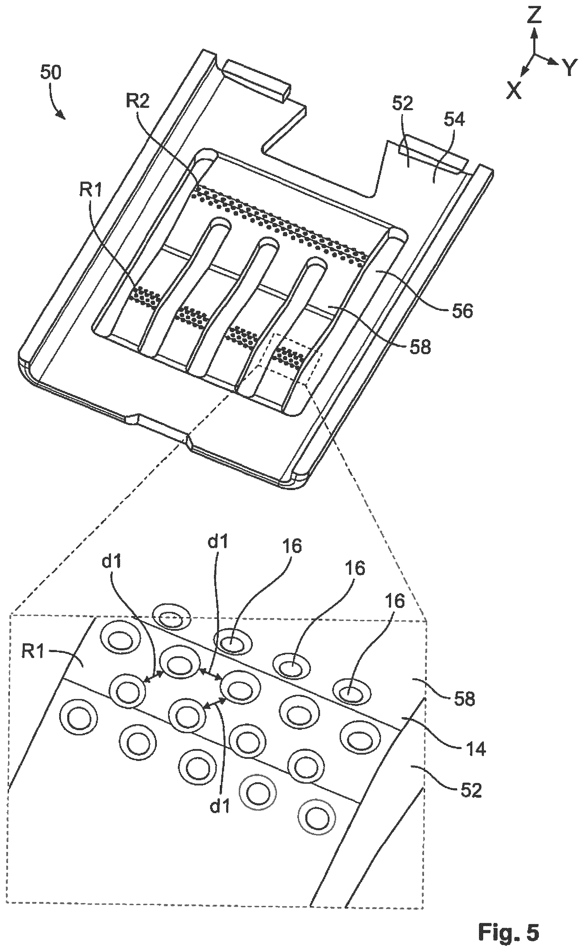

**Figure 5** illustrates an enlarged view of an electrically conductive contact element 50 according to a third embodiment of the present invention. In order to show the depressions 16 formed in the electrically conductive contact element 50, the electrically conductive material M and the optional adhesive layer 52 is not represented in Figure 5.

The electrically conductive contact element 50 according to a third embodiment has a metallic body 52 comprising a frame 54 extending in a plane (XY) and defining an aperture 56. Four contact pins 58 extends within the frame 54 across the aperture 56. The number of contact pins 58 is not limitative. Each contact pins 58 are bent with respect to the plan (XY) such as to be provided with two slightly curved regions R1 and R2. The number of curved regions is not limitative.

The curved regions R1, R2 consist of the regions of the electrically conductive contact element 50 onto which greater elastic spring forces are exerted in comparison with the rest of the contact pins 58. Elastic spring forces is intended to be exerted on the curved regions R1, R2 by a connecting part of a mating connector applying a pressure on the curved regions R1, R2 in a mating state of the connectors.

The curved regions R1, R2 are provided with a plurality of depressions 16 formed in the face 14 of the metallic body 52, as previously described in reference to Figures 1 and 2.

The depressions 16 of the plurality of depressions 16 are spaced away from each other by a minimal distance d1, wherein d1 is comprised between 0,10mm and 0,15mm. In particular, d1=0,125mm.

The location of the plurality of depressions 16 at the curved regions R1, R2 allows improving the wear resistance at the area most subject to mechanical stress, and therefore to wear.

The plurality of depressions 16 provide a redundancy of improved contact areas, thereby enhancing the reliability and durability of the electrical contact between the electrical connectors.

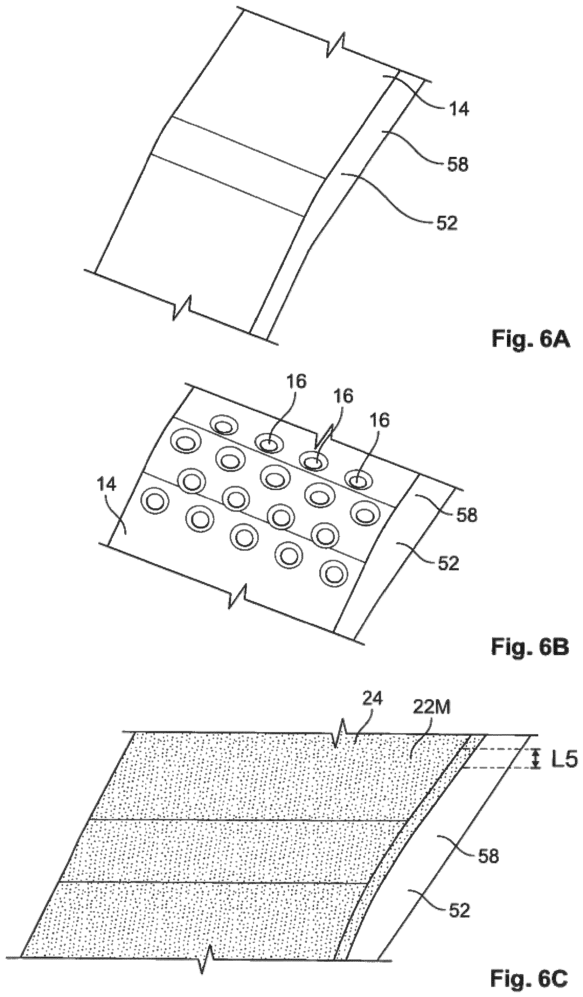

**Figures 6A, 6B** and **6C** illustrate successive steps of a method of manufacturing a contact surface of the electrically conductive contact element 50 according to the third embodiment of the present invention.

At the step represented by **Figure 6A****,** the face 14 of the metallic body 12 at the contact pin 58 is substantially uniform.

At the step represented by **Figure 6B****,** a plurality of depressions 16 has been formed by metal punching in the face 14 of the metallic body 12 at the contact pin 58. In the example of Figure 6A, each depression 16 has a substantially half-spherical shape. In a variant (not represented), the depressions 16 can have a different shape than a substantially half-spherical shape. In another variant (not represented), the plurality of depressions 16 can comprise a combination of depressions 16 of different shapes and/or sizes.

At the last step of the manufacturing method represented by **Figure 6C****,** a plating layer 22 of the electrically conductive material M of thickness L5 has been provided on the face 14 of the metallic body 12 thereby coating the face 14 and filling each depression 16 with the electrically conductive material M.

The surface 24 of the plating layer 22 facing away from the body 52 forms the contact surface 24 of the electrically conductive contact element 50.

All previously discussed embodiments are not intended as limitations but serve as examples illustrating features and advantages of the invention. The scope of the invention is defined by the appended claims. It is to be understood that some or all of the above described features can also be combined in different ways within the scope of the invention. It is noted that an individual feature described in relation with one embodiment can be combined with another embodiment within the scope of the invention.

### LIST OF REFERENCES

- 10:: electrically conductive contact element according to the first embodiment
- 12:: body
- 14:: (first) face of the body
- 16:: depression
- 18:: opening of the depression
- 20:: reservoir
- 22:: layer
- 24:: contact surface

- 30:: electrically conductive contact element according to the second embodiment
- 32:: adhesion layer

- 40:: disruption in a wear stage
- 42:: groove in a wear stage
- 44:: contact area in a wear stage

- 50:: electrically conductive contact element according to the third embodiment
- 52:: metallic body
- 54:: frame
- 56:: aperture
- 58:: contact pins

- A:: deepest zone of the depression 16
- d1:: spacing distances between depressions 16
- L1:: diameter of the depression 16
- L2:: maximal depth of the depression 16
- L3, L3':: thickness of the layer 22 of the electrically conductive material M
- L4:: thickness of the adhesion layer 32
- L5:: thickness of the layer 22 of the electrically conductive material M
- M:: electrically conductive material
- T1, T2, T3:: maximum thickness of the electrically conductive material M
- R1. R2:: curved regions of the contact pin 58

## Claims

1. An electrically conductive contact element (10, 30, 50) for an electrical connector, having a contact surface (24) configured to be brought into contact with a surface of a connecting part of a mating electrical connector adapted to be mated with the electrical connector, the electrically conductive contact element (10, 30, 50) comprising:
a body (12, 52) and a layer (22) of an electrically conductive material (M) provided on a first face (14) of said body (12, 52),
wherein the contact surface (24) is formed by a surface (24) of said layer (22) facing away from the body (12, 52),
the first face (14) of the body (12, 52) comprises at least one depression (16) forming a reservoir (20) filled with the electrically conductive material (M), and
wherein a minimum dimension (L1) of the at least one depression (16, 18) in a plan of the first face (14) of the body (12, 52) is greater than 0,05mm **characterized in that** a maximal depth (L2) of the at least one depression (16) is greater than 0,03mm.

2. The electrically conductive contact element according to claim 1, wherein the electrically conductive material (M) filled in the reservoir (16) is configured to come in contact with a surface of the connecting part of the mating electrical connector.

3. The electrically conductive contact element according to claim 1 or 2, wherein the body (12, 52) is made of metal and the electrically conductive material (M) is a plating material made of tin, nickel, silver, gold, a tin-nickel alloy, an alloy of tin or a nickel-silver alloy.

4. The electrically conductive contact element according to one of the preceding claims, wherein the minimum dimension (L1) of the at least one depression (16, 18) in a plan of the first face (14) of the body (12, 52) is comprised between 0,05mm and 0,06mm.

5. The electrically conductive contact element according to one of the preceding claims, wherein the maximal depth (L2) of the at least one depression (16) is greater than 0,04mm, in particular greater than 0,05mm.

6. The electrically conductive contact element according to one of the preceding claims, wherein the at least one depression (16) has a half-spherical shape or a groove shape, such that the groove extends along an axis aligned with a direction corresponding to a back and forth motion between the contact surface (24) and the surface of the connecting part of the mating electrical connector, in particular a rounded groove shape.

7. The electrically conductive contact element according to one of the preceding claims, further comprising an adhesion layer (32) provided on the first face (14) of the body (12, 52) and sandwiched between the first face (14) of the body (12, 52) and the layer (22) of the electrically conductive material (M).

8. The electrically conductive contact element according to claim 7, wherein in the at least one depression (16), a thickness (L3') of the electrically conductive material (M) is greater than a thickness (L4) of the adhesion layer (32).

9. The electrically conductive contact element according to claim 7 or 8, wherein the adhesion layer (32) is made of nickel, copper or tin.

10. The electrically conductive contact element according to one of the preceding claims, comprising a plurality of depressions (16) and a minimum spacing distance (d1) between the depressions (16) is comprised between 0,10mm and 0,15mm.

11. The electrically conductive contact element according to one of the preceding claims, wherein the first face (14) of the body (12) comprises at least one curved region (R1, R2) curved in at least one direction and the at least one depression (16) is arranged at the at least one curved region (R1, R2).

12. The electrically conductive contact element according to one of the preceding claims, wherein the first face (14) of the body (12) comprises a plurality of depressions (16) of different shapes and/or sizes.

13. An electrical connector configured to be coupled with a mating electrical connector, comprising an electrically conductive contact element (10, 30, 50) according to any one of the preceding claims.

14. Method of manufacturing a contact surface of an electrically conductive contact element, comprising the steps of:
a) forming at least one depression (16) in a first face (14) of a body (12, 52) of the electrically conductive contact element, in particular by metal punching, such that a minimum dimension (L1) of the at least one depression (16, 18) in a plan of the first face (14) of the body (12, 52) is greater than 0,05mm and a maximal depth (L2) of the at least one depression (16) is greater than 0,03mm, and then
b) applying a layer (22) of an electrically conductive material (M) on the first face (14) including filling the at least one depression (16) with the electrically conductive material (M).

15. Method according to claim 14, further comprising, before the step b), a step of applying an adhesion layer (32) on the first face (14) of the body (52) of the electrically conductive contact element (30).

## Patentansprüche

1. Elektrisch leitendes Kontaktelement (10, 30, 50) für einen elektrischen Steckverbinder, aufweisend eine Kontaktfläche (24), die so ausgeführt ist, dass sie in Kontakt mit einer Fläche eines verbindenden Teils eines elektrischen Gegen-Steckverbinders gebracht wird, der zum Ineinanderpassen mit dem elektrischen Steckverbinder eingerichtet ist, wobei das elektrisch leitende Kontaktelement (10, 30, 50) umfasst:
einen Körper (12, 52) sowie eine Schicht (22) aus einem elektrisch leitenden Material (M), die an einer ersten Fläche (14) des Körpers (12, 52) vorhanden ist, wobei die Kontaktfläche (24) durch eine erste Fläche (24) der Schicht (22) gebildet wird, die von dem Körper (12, 52) weg gewandt ist,
wobei die erste Fläche (14) des Körpers (12, 52) wenigstens eine Vertiefung (16) umfasst, die ein mit dem elektrisch leitenden Material (M) gefülltes Reservoir (20) bildet, und
wobei eine minimale Abmessung (L1) der wenigstens einen Vertiefung (16, 18) in einer Ebene der ersten Fläche (14) des Körpers (12, 52) größer ist als 0,05 mm,
**dadurch gekennzeichnet, dass**
eine maximale Tiefe (L2) der wenigstens einen Vertiefung (16) größer ist als 0,03 mm.

2. Elektrisch leitendes Kontaktelement nach Anspruch 1, wobei das in das Reservoir (16) gefüllte elektrisch leitende Material (M) so ausgeführt ist, dass es in Kontakt mit einer Fläche des verbindenden Teils des elektrischen Gegen-Steckverbinders kommt.

3. Elektrisch leitendes Kontaktelement nach Anspruch 1 oder 2, wobei der Körper (12, 52) aus Metall besteht und das elektrisch leitende Material (M) ein Plattiermaterial ist, das aus Zinn, Nickel, Silber, Gold, einer Zinn-Nickel-Legierung, einer Legierung aus Zinn oder einer Nickel-Silber-Legierung besteht.

4. Elektrisch leitendes Kontaktelement nach einem der vorangehenden Ansprüche, wobei die minimale Abmessung (L1) der wenigstens einen Vertiefung (16, 18) in einer Ebene der ersten Fläche (14) des Körpers (15, 52) zwischen 0,05 mm und 0,06 mm beträgt.

5. Elektrisch leitendes Kontaktelement nach einem der vorangehenden Ansprüche, wobei die maximale Tiefe (L2) der wenigstens einen Vertiefung (16) größer als 0,04 mm, insbesondere größer als 0,05mm, ist.

6. Elektrisch leitendes Kontaktelement nach einem der vorangehenden Ansprüche, wobei die wenigstens eine Vertiefung (16) eine Halbkugelform oder eine Rillenform dahingehend hat, dass sich die Rille entlang einer Achse erstreckt, die mit einer Richtung fluchtend ist, die einer Hin- und Herbewegung zwischen der Kontaktfläche (24) und der Fläche des verbindenden Teils des elektrischen Gegen-Steckverbinders entspricht, insbesondere eine abgerundete Rillenform.

7. Elektrisch leitendes Kontaktelement nach einem der vorangehenden Ansprüche, die des Weiteren eine Haftschicht (32) umfasst, die sich an der ersten Fläche (14) des Körpers (12, 52) befindet und zwischen der ersten Fläche (14) des Körpers (12, 52) und der Schicht (22) aus dem elektrisch leitenden Material (M) eingeschlossen ist.

8. Elektrisch leitendes Kontaktelement nach Anspruch 7, wobei in der wenigstens einen Vertiefung (16) eine Dicke (L3') des elektrisch leitenden Materials (M) größer ist als eine Dicke (L4) der Haftschicht (32).

9. Elektrisch leitendes Kontaktelement nach Anspruch 7 oder 8, wobei die Haftschicht (32) aus Nickel, Kupfer oder Zinn besteht.

10. Elektrisch leitendes Kontaktelement nach einem der vorangehenden Ansprüche, die eine Vielzahl von Vertiefungen (16) umfasst, und wobei ein minimaler Abstand (d1) zwischen den Vertiefungen (16) zwischen 0,10 mm und 0,15 mm liegt.

11. Elektrisch leitendes Kontaktelement nach einem der vorangehenden Ansprüche, wobei die erste Fläche (14) des Körpers (12) wenigstens einen gekrümmten Bereich (R1, R2) umfasst, der in wenigstens einer Richtung gekrümmt ist, und die wenigstens eine Vertiefung (16) an dem wenigstens einen gekrümmten Bereich (R1, R2) angeordnet ist.

12. Elektrisch leitendes Kontaktelement nach einem der vorangehenden Ansprüche, wobei die erste Fläche (14) des Körpers (12) eine Vielzahl von Vertiefungen (16) unterschiedlicher Formen und/oder Größen umfasst.

13. Elektrischer Steckverbinder, der zum Koppeln mit einem elektrischen Gegen-Steckverbinder ausgeführt ist, umfassend ein elektrisch leitendes Kontaktelement (10, 30, 50) nach einem der vorangehenden Ansprüche.

14. Verfahren zum Herstellen einer Kontaktfläche eines elektrisch leitenden Kontaktelementes, umfassend die folgenden Schritte:
a) Ausbilden wenigstens einer Vertiefung (16) in einer ersten Fläche (14) eines Körpers (12, 52) des elektrisch leitenden Kontaktelementes, insbesondere mittels Metallstanzen, so dass eine minimale Abmessung (L1) der wenigstens einen Vertiefung (16, 18) in einer Ebene der ersten Fläche (14) des Körpers (12, 52) größer ist als 0,05 mm und eine maximale Tiefe (L2) der wenigstens einen Vertiefung (16) größer ist als 0,03 mm, und anschließend
b) Aufbringen einer Schicht (22) aus einem elektrisch leitenden Material (M) auf die erste Fläche (14) einschließlich Füllen der wenigstens einen Vertiefung (16) mit dem elektrisch leitenden Material (M).

15. Verfahren nach Anspruch 14, das des Weiteren vor dem Schritt b) einen Schritt des Aufbringens einer Haftschicht (32) auf die erste Fläche (14) des Körpers (52) des elektrisch leitenden Kontaktelementes (30) umfasst.

## Revendications

1. Élément de contact électroconducteur (10, 30, 50) pour un connecteur électrique, comportant une surface de contact (24) configurée pour être mise en contact avec une surface d'une partie de connexion d'un connecteur électrique d'accouplement adapté pour être accouplé avec le connecteur électrique, l'élément de contact électroconducteur (10, 30, 50) comprenant :
un corps (12, 52) et une couche (22) d'un matériau électroconducteur (M) pourvu sur une première face (14) dudit corps (12, 52),
dans lequel la surface de contact (24) est formée par une surface (24) de ladite couche (22) orientée à l'opposé du corps (12, 52),
dans lequel la première face (14) du corps (12, 52) comprend au moins une dépression (16) formant un réservoir (20) rempli du matériau électroconducteur (M), et
dans lequel une dimension minimale (L1) de ladite au moins une dépression (16, 18) dans le plan de la première face (14) du corps (12, 52) est supérieure à 0,05 mm,
**caractérisé en ce que** la profondeur maximale (L2) de ladite au moins une dépression (16) est supérieure à 0,03 mm.

2. Élément de contact électroconducteur selon la revendication 1, dans lequel le matériau électroconducteur (M) rempli dans le réservoir (16) est configuré pour entrer en contact avec une surface de la partie de connexion du connecteur électrique d'accouplement.

3. Élément de contact électroconducteur selon la revendication 1 ou 2, dans lequel le corps (12, 52) est réalisé en métal et le matériau électroconducteur (M) est un matériau de placage constitué d'étain, de nickel, d'argent, d'or, d'un alliage étain-nickel, d'un alliage d'étain ou d'un alliage nickel-argent.

4. Élément de contact électroconducteur selon l'une des revendications précédentes, dans lequel la dimension minimale (L1) de ladite au moins une dépression (16, 18) dans le plan de la première face (14) du corps (12, 52) est comprise entre 0,05 mm et 0,06 mm.

5. Élément de contact électroconducteur selon l'une des revendications précédentes, dans lequel la profondeur maximale (L2) de ladite au moins une dépression (16) est supérieure à 0,04 mm, en particulier supérieure à 0,05 mm.

6. Élément de contact électroconducteur selon l'une des revendications précédentes, dans lequel ladite au moins une dépression (16) présente une forme semi-sphérique ou une forme de rainure, de sorte que la rainure s'étende le long d'un axe aligné avec une direction correspondant à un mouvement de va-et-vient entre la surface de contact (24) et la surface de la partie de connexion du connecteur électrique d'accouplement, en particulier une forme de rainure arrondie.

7. Élément de contact électroconducteur selon l'une des revendications précédentes, comprenant en outre une couche d'adhérence (32) pourvue sur la première face (14) du corps (12, 52) et intercalée entre la première face (14) du corps (12, 52) et la couche (22) du matériau électroconducteur (M) .

8. Élément de contact électroconducteur selon la revendication 7, dans lequel, dans ladite au moins une dépression (16), l'épaisseur (L3') du matériau électroconducteur (M) est supérieure à l'épaisseur (L4) de la couche d'adhérence (32).

9. Élément de contact électroconducteur selon la revendication 7 ou 8, dans lequel la couche d'adhérence (32) est constituée de nickel, de cuivre ou d'étain.

10. Élément de contact électroconducteur selon l'une des revendications précédentes, comprenant une pluralité de dépressions (16) et une distance d'espacement minimale (d1) entre les dépressions (16) comprise entre 0,10 mm et 0,15 mm.

11. Élément de contact électroconducteur selon l'une des revendications précédentes, dans lequel la première face (14) du corps (12) comprend au moins une région incurvée (R1, R2) qui est incurvée dans au moins une direction, et ladite au moins une dépression (16) est agencée dans ladite au moins une région incurvée (R1, R2).

12. Élément de contact électroconducteur selon l'une des revendications précédentes, dans lequel la première face (14) du corps (12) comprend une pluralité de dépressions (16) de formes et/ou de tailles différentes.

13. Connecteur électrique configuré pour être couplé à un connecteur électrique d'accouplement, comprenant un élément de contact électroconducteur (10, 30, 50) selon l'une quelconque des revendications précédentes.

14. Procédé de fabrication d'une surface de contact d'un élément de contact électroconducteur, comprenant les étapes suivantes :
a) formation d'au moins une dépression (16) dans une première face (14) d'un corps (12, 52) de l'élément de contact électroconducteur, en particulier par poinçonnage du métal, de sorte que la dimension minimale (L1) de ladite au moins une dépression (16, 18) dans le plan de la première face (14) du corps (12, 52) soit supérieure à 0,05 mm et la profondeur maximale (L2) de ladite au moins une dépression (16) soit supérieure à 0,03 mm, puis
b) application d'une couche (22) d'un matériau électroconducteur (M) sur la première face (14), incluant le remplissage de ladite au moins une dépression (16) avec le matériau électroconducteur (M).

15. Procédé selon la revendication 14, comprenant en outre, avant l'étape b), une étape d'application d'une couche d'adhérence (32) sur la première face (14) du corps (52) de l'élément de contact électroconducteur (30).
